# EUROPÄISCHE PATENTSCHRIFT

(11) **EP 1 579 125 B1**
(45) Veröffentlichungstag und Bekanntmachung des Hinweises auf die Patenterteilung: **15.04.2009**
(21) Anmeldenummer: 03756442.4
(22) Anmeldetag: 30.09.2003
(51) Int. Cl.: F16H 1/16, H02K 7/08

(54) **GETRIEBE-ANTRIEBSEINHEIT**
GEAR TRANSMISSION UNIT
UNITE D'ENTRAINEMENT DE TRANSMISSION

(30) Priorität: 20.12.2002 DE 10259957
(43) Veröffentlichungstag der Anmeldung: 28.09.2005
(73) Patentinhaber: ROBERT BOSCH GMBH, 70442 Stuttgart (DE)
(72) Erfinder: LAMPERT, Rico, 77880 Sasbach (DE); TASCH, Franz, 76287 Rheinstetten (DE); KRAUTH, Marco, 76547 Sinzheim (DE); MATUSSIK, Jan, F-67100 Strasbourg (FR); SCHRAMM, François, F-67100 Strasbourg (FR)
(86) Internationale Anmeldenummer: PCT/DE2003/003250
(87) Internationale Veröffentlichungsnummer: WO 2004/061329

(56) Entgegenhaltungen:
- EP-A- 0 563 583
- DE-A- 4 218 167
- DE-A- 10 114 453
- US-B1- 6 486 577

## Beschreibung

### Stand der Technik

Die Erfindung betrifft eine Getriebe-Antriebseinheit mit einem eine Ankerwelle aufweisenden elektrischen Antriebsmotor nach der Gattung des unabhängigen Anspruchs 1, und ein Verfahren zur Herstellung einer Getriebe-Antriebseinheit entsprechend dem Oberbegriff des Anspruchs 11.

Mit dem deutschen Gebrauchsmuster GM 297 02 525.2 ist eine Vorrichtung bekannt geworden, die beispielsweise zum Verschieben von Fensterscheiben, Schiebedächern oder Sitzen eingesetzt wird. Dabei wird die Aufgabe gelöst, ein unerwünschtes Längsspiel der Ankerwelle mittels eines stirnseitig angebrachten Dämpfgummis zu vermeiden. Auf die Ankerwelle ist eine Schnecke aufgepresst, die das Drehmoment des Elektromotors auf das Schneckenrad überträgt. Das vordere Ende der Ankerwelle wird dabei in einer Drehlageraufnahmebuchse geführt, damit die Schnecke nicht radial ausweichen kann. An ihren Stirnseiten ist die Ankerwelle über Anlaufscheiben sowie über Dämpfungsmittel am Gehäuse abgestützt. Im Bereich der einen Stirnseite der Ankerwelle weist das Gehäuse hierzu in axialer Richtung eine Ausnehmung auf, in die ein Dämpfgummi als Dämpfungsmittel eingepresst ist. Wird der Antrieb belastet, drückt die Ankerwelle die Anlaufscheibe gegen das Dämpfgummi, wodurch sich dieses verformt.

Mit der gattungsgemäßen DE-A-10114453 ist eine Getriebeantriebseinheit bekannt geworden, bei der das Ende einer Ankerwelle in einer topfförmigen Anlaufhülse anliegt. Die Anlaufhülse ist wiederum über ein ringförmiges Dämpfungsmittel am Getriebegehäuse abgestützt. Hierbei werden die Anlaufhülse, das Dämpfungsmittel und die Ankerwelle axial in eine entsprechende Aufnahme des Gehäuses montiert.

Die EP-A-563583 zeigt einen Getriebemotor, bei dem das Ende einer Ankerwelle in einer topfförmigen Anlaufhülse gelagert ist. Auf der Anlaufhülse ist axial eine Ringfeder montiert, die sich in einer Sackausnehmung des Getriebegehäuses abstützt.

In der DE-A-4218167 ist ein Elektromotor mit einem Schneckengetriebe dargestellt, bei dem sich das Ende einer Ankerwelle an einer Anlaufscheibe abstützt. Die Anlaufscheibe ist mit einem Fortsatz axial in ein Dämpfungsmittel eingefügt, das wiederum axial in einer entsprechenden Aufnahme des Getriebegehäuses aufgenommen ist.

Für Anwendungen mit geringeren Komfortanforderungen ist es wünschenswert, aus Kosten- und Montagegründen auf das Dämpfungsmittel zu verzichten. Dies ist jedoch bei der Vorrichtung gemäß obigem Gebrauchsmuster nur mit erheblichem Aufwand möglich, da dann an die Maßgenauigkeit der Ankerwelle, der Anlaufscheibe und des Gehäuses sehr hohe Anforderungen gestellt werden, um ein Ankerlängsspiel zu vermeiden.

### Vorteile der Erfindung

Die erfindungsgemäße Vorrichtung mit den Merkmalen des Anspruchs 1 hat den Vorteil, dass durch den Aufbau der Getriebe-Antriebseinheit mit radialer Montagerichtung in einfacher Weise eine Antriebseinheit mit und ohne Verwendung eines Dämpfungsmittels hergestellt werden kann. Dies liegt darin begründet, dass bei der radialen Montage das Ankerlängsspiel gemessen werden kann, um entsprechende Maßnahmen zur Eliminierung des Ankerlängsspiels zu ergreifen. Somit kann eine Komfortsteigerung durch Unterbindung der Umschaltgeräusche erzielt werden. Weist das Gehäuse eine Aussparung mit einer radialen und einer axialen Öffnung auf, so kann das Dämpfungsmittel durch die radiale Öffnung montiert werden, und über die axiale Öffnung eine Axialkraft auf das Anlaufelement übertragen. Die Öffnung kann in einem Arbeitsgang mit dem Herstellen des Gehäuses, beispielsweise ein Spritzgussteil, hergestellt werden und benötigt nur wenig Bauraum.

Durch die in den Unteransprüchen aufgeführten Merkmale sind vorteilhafte Weiterbildung der Vorrichtung nach dem Hauptanspruch möglich. So kann bei dieser Anordnung das Längsspiel der Ankerwelle sowohl mit, als auch ohne Dämpfungsmittel wirksam eliminiert werden. Dadurch kann für Anwendungen mit geringem Verschleiß der Anlaufscheibe bzw. der Stirnseite der Ankerwelle auf ein Dämpfungsmittel verzichtet werden,. Für Anwendungen mit sehr langen Laufzeiten kann mit dem Dämpfungsmittel auch über sehr lange Betriebszeiten ein Längsspiel zuverlässige unterbunden werden.

Wird aus Kostengründen auf das Dämpfungsmittel verzichtet, liegt die Ankerwelle über das Anlaufelement an einer Schulter am Gehäuse an. Wird jedoch ein Dämpfungsmittel radial montiert, ist es auch möglich, dass das Anlaufelement elastisch gedämpft wird, bis es beispielsweise bei starker Belastung des Antriebs an der Schulter anliegt.

Vorteilhafterweise kann das Axialspiel zwischen der Stirnseite der Ankerwelle und der Schulter bei der radialen Montageanordnung mit einfachen Verfahren gemessen werden, um daraus die notwendige axiale Dicke des ebenfalls radial montierbaren Anlaufelements zu bestimmen. Dadurch können auch große Toleranzen der Ankerwellenlänge oder der Gehäusemaße ausgeglichen werden.

Günstig ist es, die axiale Dicke des Anlaufelements etwas größer zu wählen, als das gemessene Längsspiel, um eine leichte Pressung des Anlaufelements zu erzielen.

Die Aussparung kann vorzugsweise zylinderförmig ausgebildet sein, und die Öffnung einfach als radiale Bohrung ausgebildet sein.

Dazu ist es vorteilhaft, das Dämpfungselement in montiertem Zustand vorzuspannen, da dann auch bei einem Abrieb der Ankerwelle bzw. des Anlaufelements dieses noch gegen die Stirnseite der Ankerwelle gepresst wird. Durch die Vorspannung des Dämpfungsmittels auf die Ankerwelle wird auch eine bessere Bremswirkung des Antriebs mit einer damit verbundenen Selbsthemmung erreicht, die für verschiedene Verstellanwendungen gefordert wird.

Ein sehr kostengünstiges Dämpfungsmittel stellt ein Gummiformteil, beispielsweise aus N-Buthyl-Rubber dar, das verfahrenstechnisch günstig in die entsprechende Ausformung im Gehäuse gepresst werden kann.

Alternativ ist aber auch ein elastisches Federelement möglich, beispielweise eine Druckfeder, deren Elastizität über einen langen Zeitraum konstant erhalten bleibt

In einer weiteren Ausführung kann das Dämpfungsmittel auch einteilig mit dem Anlaufelement ausgebildet sein, wodurch diese Einheit in einem Verfahrensschritt montiert werden kann.

### Zeichnung

In der Zeichnung sind Ausführungsbeispiele einer erfindungsgemäßen Vorrichtung dargestellt und in der nachfolgenden Beschreibung näher erläutert.

Es zeigen
- Figur 1: eine erfindungsgemäße Getriebe-Antriebseinheit im teilweisen Schnitt und
- Figur 2: ein weiteres Ausführungsbeispiel gemäß einem vergrößerten Ausschnitt nach II der Figur 1.

### Beschreibung

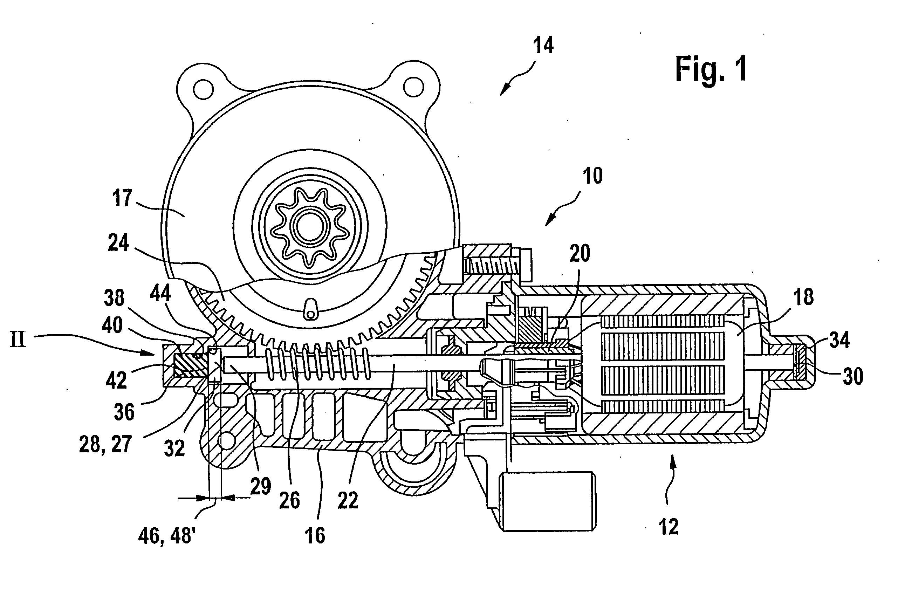

In Figur 1 ist eine Getriebe-Antriebseinheit 10 dargestellt mit einem Elektromotor 12 und einem ein Getriebe 14 umgebenden mehrteiligen Gehäuse 16. Der Elektromotor 12 weist einen Anker 18, einen Kommutator 20 und eine mehrfach gelagerte Ankerwelle 22 auf, die sich bis in den Bereich des Getriebes 14 erstreckt. Auf der Ankerwelle 22 ist eine Schnecke 26 angeordnet, die mit einem Schneckenrad 24 kämmt. Die Ankerwelle 22 weist Stirnseiten 28 und 30 auf, die an Anlaufscheiben 32 und 34 anliegen, die sich wiederum am Gehäuse 16 abstützen. Zur Unterbindung des Ankerlängsspiels ist an einem Ende 29 der Ankerwelle 22 zwischen dem Anlaufelement 32 und dem Gehäuse 16 ein Dämpfungsmittel 36 angeordnet. Das Dämpfungsmittel 36, beispielsweise ein Gummiformteil oder ein elastisches Federelement, ist in einer Ausformung 38 des Gehäuses 16 angeordnet, die eine Öffnung 40 radial zur Ankerwelle 22 (senkrecht zur Zeichenebene) aufweist. Die radiale Öffnung 40 ist auf Grund der Darstellung der Vorrichtung im Schnitt nicht ersichtlich und wird nach der vollständigen radialen Montage des Dämpfungsmittels 36 und des Anlaufelements 32 mit einem Deckel 17 des Gehäuses 16 verschlossen. Die Ausformung 38 weist ebenfalls eine axiale Öffnung 42 zum Anlaufelement 32 hin auf, durch die das Dämpfungsmittel 36 auf das Anlaufelement 32 drückt. Das Anlaufelement 32 liegt auf der einen Seite an einer Schulter 44 des Gehäuses 16 und auf der anderen Seite an der Stirnseite 28 der Ankerwelle 22 an. Das Anlaufelement 32 weist dabei eine Dicke 46 auf, die in diesem Zustand derart bemessen ist, dass das Ankerlängsspiel zuverlässig eliminiert wird. Dadurch ist das Anlaufelement 32 dann unter leichtem Druck zwischen der Stirnfläche 38 und der Schulter 44 eingepresst.

Diese Vorrichtung kann nun wahlweise mit oder ohne Verwendung des Dämpfungsmittels 36 produziert werden, wobei zumindest anfangs direkt nach der Herstellung in beiden Fällen das Ankerlängsspiel unterbunden ist. Wird auf das Dämpfungsmittel 36 verzichtet, wird nach der Montage der Ankerwelle 22 über den radialen Montagezugang der Betrag 48 zwischen der Stirnseite 28 und der Schulter 44 gemessen, der das Ankerlängsspiel beinhaltet. Daraufhin wird eine Anlaufscheibe 32 mit einer Dicke 46 ausgewählt, die mindestens dem gemessenen Betrag 48 entspricht und anschließend radial montiert, so dass sich diese an der Schulter 44 abstützt. Um zu verhindern, dass bei langen Laufzeiten durch Verschleißerscheinungen am Anlaufelement 32 oder der Ankerwelle 22 ein Längsspiel auftritt, wird in der zweiten Variante ein Dämpfungsmittel 36 zwischen dem Anlaufelement 32 und dem Gehäuse 16 unter Vorspannung angeordnet, das auf Grund seiner Ausdehnung das im Laufe der Zeit auftretende Längsspiel elastisch kompensiert. Bei dieser Variante bewegt sich das Anlaufelement 32 entsprechend dem Abrieb zur Ankerwelle 22 hin, so dass es unter normaler Last nicht mehr an der Schulter 44 anliegt. In diesem Zustand wird das Ankerlängsspiel durch das Dämpfungsmittel 36 gedämpft. Die konkrete Ausgestaltung der Ausformung 38, sowie des darin angeordneten Dämpfungsmittels 36 und des Anlaufelements 32, variiert je nach Anwendung.

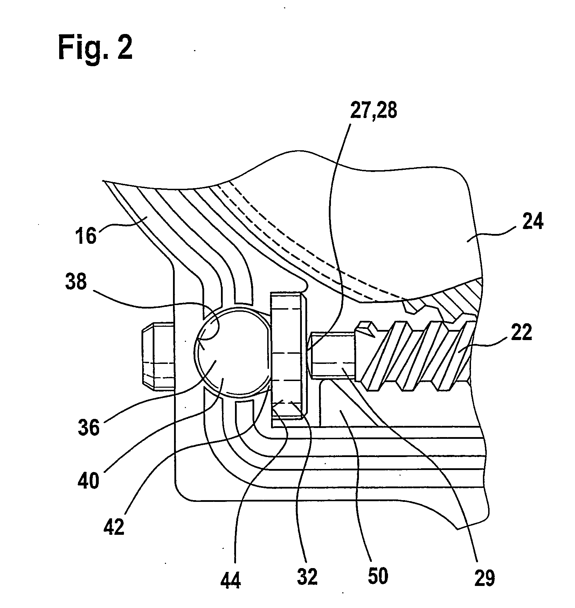

So ist in einem weiteren Ausführungsbeispiel in Figur 2 die Ausformung 38 in etwa zylinderförmig und in etwa senkrecht zur Ankerwelle 22 ausgerichtet. Figur 2 zeigt keinen Schnitt, sondern einen Ausschnitt eines Getriebegehäuses 16 ohne Deckel 17, so dass auch die radiale Öffnung 40, die hier in etwa kreisförmig ausgebildet ist, sichtbar ist. In der Ausformung 38 ist ein korrespondierendes zylinderförmiges Dämpfungsmittel 36 aus überwiegend N-Buthyl-Rubber angeordnet. Das Dämpfungsmittel 36 tritt teilweise durch die axiale Öffnung 42 hindurch und drückt die Anlaufscheibe 32 gegen die als Anlaufpilz 27 ausgeformte Stirnseite 28 der Ankerwelle 22. Die Anlauffläche des Anlaufelements 32 ist nicht senkrecht zur Achse der Ankerwelle 22 ausgerichtet, sondern leicht geneigt, damit die am Ende 29 frei gelagerte Ankerwelle 22 nicht zu stark ausgelenkt und eine bessere Selbsthemmung erzielt wird. Dabei stützt sich das Anlaufelement 32 über die Schulter 44 am Gehäuse 16 ab. Des weiteren ist am Gehäuse 16 ein Anschlag 50 angeordnet, der das Ende 29 der Ankerwelle 22 bei starker Belastung des Antriebs 10, beispielsweise einem Blockieren, abstützt. Das Dämpfungsmittel 36 liegt unter Vorspannung am Anlaufelement 32 an, so dass bei einem Verschleiß der Anlaufscheibe 32 oder des Anlaufpilzes 37 das Dämpfungselement 36 das auftretende Längsspiel elastisch ausgleicht. Durch diese Anordnung werden auch bei langen Laufzeiten Umschaltgeräusche wirkungsvoll verhindert.

Alternativ wird beispielsweise für weniger geräuschkritische Anwendungen bei Verwendung der gleichen Bauteile 16, 32, 22, 44 das Dämpfungselement 36 weggelassen, und das Anlaufelement 32 unter leichter Pressung zwischen der Schulter 44 und dem Anlaufpilz 27 radial zur Ankerwelle 22 eingefügt. Dies ist nur möglich, weil das Längsspiel mittels des Betrags 48 zwischen der Schulter 44 und der Stirnseite 28 auf Grund der radialen Montagerichtung exakt gemessen werden kann. Bei einer axialen Montagerichtung, bei der das Dämpfungsmittel 36 und/oder die Anlaufscheibe 32 parallel zur Ankerwelle 22 montiert werden, ist es nicht möglich, das Ankerlängsspiel (Betrag 48) auszumessen, um die Dicke 46 des Anlaufelements 32 entsprechend anzupassen.

Die Erfindung findet vorzugsweise Anwendung für Verstellantriebe im Kraftfahrzeug, wie beispielsweise für Fensterheber, Schiebedach, Sitzverstellung oder Scheibenwischer. Die Erfindung ist nicht auf eine bestimmte Getriebebauform, wie das Schneckengetriebe beschränkt, sondern bezieht sich auf beliebige Ausführungen des Getriebes, beispielsweise auch Stirnradgetriebe oder auf unterschiedliche Lagerungen der Ankerwelle 22. Als Dämpfungsmittel 36 kommen ebenfalls elastische Federmittel aus Metall oder Kunststoff in Frage, die unter Vorspannung in einer radial geöffneten Ausformung 38 verbaut werden können. Des weiteren umfasst die Erfindung auch einzelne Merkmale der Ausführungsbeispiele oder eine beliebige Kombination der Merkmale der unterschiedlichen Ausführungsbeispiele.

## Patentansprüche

1. Getriebe-Antriebseinheit (10) mit
- einem eine Ankerwelle (22) aufweisenden elektrischen Antriebsmotor (12), und
- einem diesem nachgeordneten Getriebe (14), insbesondere Schneckengetriebe, das mit dem Antriebsmotor (12) über die Ankerwelle (22) wirkverbunden ist,
die zumindest an einer ihrer Stirnseiten (28,30) über ein Anlaufelement (32) an einem Gehäuseteil (16) anliegt, wobei
das Gehäuseteil (16) eine Ausformung (38) aufweist, wobei
ein Dämpfungsmittel (36) in dieser Ausformung (38) angeordnet ist,
wobei die Ausformung eine axiale Öffnung (42) zum Anlaufelement (32) hin aufweist,
wobei durch diese Öffnung (42) das Dämpfungsmittel (36) auf das Anlaufelement (32) drücken kann,
**dadurch gekennzeichnet, dass** in der
Ausformung (38) eine radiale Öffnung (40), senkrecht zur Ankerwelle (22) angeordnet ist, und dass
das Dämpfungsmittel (36) zwischen dem Anlaufelement (28) und dem Gehäuseteil (16) radial zur Ankerwelle (14) montierbar ist.

2. Getriebe-Antriebseinheit (10) nach Anspruch 1, **dadurch gekennzeichnet, dass** nach der Montage der Ankerwelle (22) deren Längsspiel wahlweise mit als auch ohne Dämpfungsmittel (36) ausgleichbar ist.

3. Getriebe-Antriebseinheit (10) nach einem der Ansprüche 1 oder 2, **dadurch gekennzeichnet, dass** das Gehäuseteil (16) eine Schulter (44) aufweist, an dem das Anlaufelement (32) direkt zum Anliegen kommen kann, insbesondere wenn kein Dämpfungsmittel (36) montiert ist.

4. Getriebe-Antriebseinheit (10) nach einem der vorgehenden Ansprüche, **dadurch gekennzeichnet, dass** nach der Montage der Ankerwelle (22) im Gehäuseteil (16) das Längsspiel der Ankerwelle (22) messbar ist.

5. Getriebe-Antriebseinheit (10) nach einem der vorgehenden Ansprüche, **dadurch gekennzeichnet, dass** die axiale Dicke (46) des Anlaufelements (32), das an der Schulter (44) anliegt, derart gewählt wird, dass das Längsspiel kompensiert wird.

6. Getriebe-Antriebseinheit (10) nach einem der vorgehenden Ansprüche, **dadurch gekennzeichnet, dass** das Dämpfungsmittel (32) in einer insbesondere zylinderförmigen Ausformung (38) angeordnet ist, die sowohl eine Öffnung (40) radial zur Ankerwelle (22) als auch eine Öffnung (42) axial zur Ankerwelle (22), zu deren Stirnseite (28) hin, aufweist.

7. Getriebe-Antriebseinheit (10) nach einem der vorgehenden Ansprüche, **dadurch gekennzeichnet, dass** das Anlaufelement (32) nach dessen Montage direkt an der Schulter (44) anliegt und das Dämpfungselement (36) unter Vorspannung gegen das Anlaufelement (32) drückt.

8. Getriebe-Antriebseinheit (10) nach einem der Ansprüche 1 bis 13, **dadurch gekennzeichnet, dass** das Dämpfungsmittel (36) ein vorzugsweise zylinderförmiges Dämpfgummi (36), bestehend aus Weichgummi, insbesondere aus zumindest überwiegend N-Buthyl-Rubber, ist.

9. Getriebe-Antriebseinheit (10) nach einem der vorgehenden Ansprüche, **dadurch gekennzeichnet, dass** das Dämpfungsmittel (36) ein Federelement (36), insbesondere eine Spiralfeder, ist.

10. Getriebe-Antriebseinheit (10) nach einem der vorgehenden Ansprüche, **dadurch gekennzeichnet, dass** das Anlaufelement (32) mit dem Dämpfungsmittel (36) eine Baueinheit bildet.

11. Verfahren zum Herstellen einer Getriebe-Antriebseinheit (10) mit einem eine Ankerwelle (22) aufweisenden elektrischen Antriebsmotor (12) und einem diesem nachgeordneten Getriebe (14), insbesondere Schneckengetriebe, das mit dem Antriebsmotor (12) über die Ankerwelle (22) wirkverbunden ist, die zumindest an einer ihrer Stirnseiten (28, 30) über ein Anlaufelement (32) an einem Gehäuseteil (16) anliegt, wobei das Gehäuseteil (16) eine Ausformung (38) aufweist und wobei ein Dämpfungsmittel (36) in dieser Ausformung (38) angeordnet ist wobei die Ausformung (38) eine axiale Öffnung (42) zum Anlaufelement (32) hin aufweist, wobei durch diese Öffnung (42) das Dämpfungsmittel (32) auf das Anlaufelement (32) drücken kann **dadurch gekennzeichnet, daß** das Dämpfungsmittel (36) zwischen dem Anlaufelement (32) und dem Gehäuseteil (16) radial, senkrecht zur Ankerwelle (22) montiert werden kann, wobei die Ausformung (38) eine radiale Öffnung (40) aufweist, die senkrecht zur Ankerwelle angeordnet wird.

12. Verfahren nach Anspruch 1, **dadurch gekennzeichnet; dass** nach der Montage der Ankerwelle (22) deren Längsspiel wahlweise mit als auch ohne Dämpfungsmittel (36) wirksam eliminiert werden kann.

13. Verfahren nach einem der vorgehenden Ansprüche, **dadurch gekennzeichnet, dass** nach der Montage der Ankerwelle (22) im Gehäuseteil (16) das Längsspiel der Ankerwelle (22) aufgrund der radialen Montagerichtung des Anlaufelements (32) gemessen wird.

14. Verfahren nach einem der vorgehenden Ansprüche, **dadurch gekennzeichnet, dass** die Anlaufscheibe (32) nach der Montage der Ankerwelle (22) im Gehäuseteil (16) radial montiert wird.

15. Verfahren nach einem der vorgehenden Ansprüche, **dadurch gekennzeichnet, dass** die axiale Dicke (46) des Anlaufelements (32), das an einer Schulter (44) des Gehäuseteils (16) anliegt, derart gewählt wird, dass das Längsspiel kompensiert wird.

16. Verfahren nach einem der vorgehenden Ansprüche, **dadurch gekennzeichnet, dass** das Anlaufelement (32) nach dessen Montage direkt an der Schulter (44) anliegt und das Dämpfungselement (36) unter Vorspannung gegen das Anlaufelement (32) drückt.

## Claims

1. Gear drive unit (10), with
- an electric drive motor (12) having an armature shaft (22), and
- a gear (14), in particular worm gear, which follows the said drive motor and which is operatively connected to the drive motor (12) via the armature shaft (22) which at least on one of its end faces (28, 30) bears via a run-on element (32) against a housing part (16),
the housing part (16) having a shaped-out portion (38), a damping means (36) being arranged in this shaped-out portion (38), the shaped-out portion having an axial orifice (42) towards the run-on element (32), the damping means (36) being capable of pressing onto the run-on element (32) through this orifice (42),
**characterized in that** a radial orifice (40) is arranged perpendicularly to the armature shaft (22) in the shaped-out portion (38), and **in that** the damping means (36) can be mounted radially with respect to the armature shaft (22) between the run-on element (32) and the housing part (16).

2. Gear drive unit (10) according to Claim 1, **characterized in that,** after the mounting of the armature shaft (22), its longitudinal play can be compensated selectively with or without the damping means (36).

3. Gear drive unit (10) according to either one of Claims 1 and 2, **characterized in that** the housing part (16) has a shoulder (44), against which the run-on element (32) can come to bear directly, particularly when no damping means (36) is mounted.

4. Gear drive unit (10) according to one of the preceding claims, **characterized in that,** after the mounting of the armature shaft (22) in the housing part (16), the longitudinal play of the armature shaft (22) can be measured.

5. Gear drive unit (10) according to one of the preceding claims, **characterized in that** the axial thickness (46) of the run-on element (32) which bears against the shoulder (44) is selected in such a way that the longitudinal play is compensated.

6. Gear drive unit (10) according to one of the preceding claims, **characterized in that** the damping means (36) is arranged in an, in particular, cylindrical shaped-out portion (38) which has both an orifice (40) radially with respect to the armature shaft (22) and an orifice (42) axially with respect to the armature shaft (22) towards the end face (28) of the latter.

7. Gear drive unit (10) according to one of the preceding claims, **characterized in that** the run-on element (32), after it has been mounted, bears directly against the shoulder (44) and presses the damping element (36) with prestress against the run-on element (32).

8. Gear drive unit (10) according to one of Claims 1 to 13, **characterized in that** the damping means (36) is a preferably cylindrical damping rubber (36) consisting of soft rubber, in particular of at least predominantly N-butyl rubber.

9. Gear drive unit (10) according to one of the preceding claims, **characterized in that** the damping means (36) is a spring element (36), in particular a helical spring.

10. Gear drive unit (10) according to one of the preceding claims, **characterized in that** the run-on element (32) forms with the damping means (36) a structural unit.

11. Method for producing a gear drive unit (10), with an electric drive motor (12) having an armature shaft (22) and with a gear (14), in particular worm gear, which follows the said drive motor and which is operatively connected to the drive motor (12) via the armature shaft (22) which at least on one of its end faces (28, 30) bears via a run-on element (32) against a housing part (16), the housing part (16) having a shaped-out portion (38), and a damping means (36) being arranged in this shaped-out portion (38), the shaped-out portion (38) having an axial orifice (42) towards the run-on element (32), the damping means (36) being capable of pressing onto the run-on element (32) through this orifice (42), **characterized in that** the damping means (36) can be mounted radially perpendicularly to the armature shaft (22) between the run-on element (32) and the housing part (16), the shaped-out portion (38) having a radial orifice (40) which is arranged perpendicularly to the armature shaft.

12. Method according to Claim 11, **characterized in that,** after the mounting of the armature shaft (22), its longitudinal play can be effectively eliminated selectively with or without the damping means (36).

13. Method according to one of the preceding claims, **characterized in that,** after the mounting of the armature shaft (22) in the housing part (16), the longitudinal play of the armature shaft (22) is measured on the basis of the radial mounting direction of the run-on element (32).

14. Method according to one of the preceding claims, **characterized in that** the run-on disc (32) is mounted radially in the housing part (16) after the mounting of the armature shaft (22).

15. Method according to one of the preceding claims, **characterized in that** the axial thickness (46) of the run-on element (32) which bears against a shoulder (44) of the housing part (16) is selected in such a way that the longitudinal play is compensated.

16. Method according to one of the preceding claims, **characterized in that** the run-on element (32), after being mounted, bears directly against the shoulder (44) and presses the damping element (36) with prestress against the run-on element (32).

## Revendications

1. Unité d'entraînement de transmission (10) comprenant :
- un moteur d'entraînement (12) électrique présentant un arbre d'induit (22), et
- une transmission (14) disposée après celui-ci, en particulier une transmission à vis sans fin, qui est connectée fonctionnellement au moteur d'entraînement (12) par le biais de l'arbre d'induit (22), qui s'applique au moins au niveau de l'un de ses côtés frontaux (28, 30) par le biais d'un élément de butée (32) contre la partie de boîtier (16),
la partie de boîtier (16) présentant une formation (38), un moyen d'amortissement (36) étant disposé dans cette formation (38), la formation présentant une ouverture axiale (42) vers l'élément de butée (32), le moyen d'amortissement (36) pouvant presser à travers cette ouverture (42) contre l'élément de butée (32),
**caractérisée en ce que**
dans la formation (38) est disposée une ouverture radiale (40), perpendiculairement à l'arbre d'induit (22), et **en ce que**
le moyen d'amortissement (36) peut être monté entre l'élément de butée (32) et la partie de boîtier (16), radialement par rapport à l'arbre d'induit (22).

2. Unité d'entraînement de transmission (10) selon la revendication 1, **caractérisée en ce qu'**après le montage de l'arbre d'induit (22), son jeu longitudinal peut être compensé de manière sélective avec ou sans moyen d'amortissement (36).

3. Unité d'entraînement de transmission (10) selon l'une quelconque des revendications 1 ou 2, **caractérisée en ce que** la partie de boîtier (16) présente un épaulement (44), sur lequel l'élément de butée (32) peut venir s'appliquer directement, en particulier lorsqu'aucun moyen d'amortissement (36) n'est monté.

4. Unité d'entraînement de transmission (10) selon l'une quelconque des revendications précédentes, **caractérisée en ce qu'**après le montage de l'arbre d'induit (22) dans la partie de boîtier (16), le jeu longitudinal de l'arbre d'induit (22) peut être mesuré.

5. Unité d'entraînement de transmission (10) selon l'une quelconque des revendications précédentes, **caractérisée en ce que** l'épaisseur axiale (46) de l'élément de butée (32), qui s'applique contre l'épaulement (44), est choisie de telle sorte que le jeu longitudinal soit compensé.

6. Unité d'entraînement de transmission (10) selon l'une quelconque des revendications précédentes, **caractérisée en ce que** le moyen d'amortissement (32) est disposé dans une formation (38) notamment cylindrique, qui présente à la fois une ouverture (40) radialement à l'arbre d'induit (22) et une ouverture (42) axialement par rapport à l'arbre d'induit (22), vers son côté frontal (28).

7. Unité d'entraînement de transmission (10) selon l'une quelconque des revendications précédentes, **caractérisée en ce que** l'élément de butée (32) après son montage, s'applique directement contre l'épaulement (44) et presse l'élément d'amortissement (36) avec précontrainte contre l'élément de butée (32).

8. Unité d'entraînement de transmission (10) selon l'une quelconque des revendications 1 à 13, **caractérisée en ce que** le moyen d'amortissement (36) est un caoutchouc d'amortissement de préférence cylindrique (36), constitué de caoutchouc mou, en particulier au moins essentiellement de caoutchouc n-butyle.

9. Unité d'entraînement de transmission (10) selon l'une quelconque des revendications précédentes, **caractérisée en ce que** le moyen d'amortissement (36) est un élément de ressort (36), en particulier un ressort spiral.

10. Unité d'entraînement de transmission (10) selon l'une quelconque des revendications précédentes, **caractérisée en ce que** l'élément de butée (32) forme avec le moyen d'amortissement (36) une unité constructive.

11. Procédé de fabrication d'une unité d'entraînement de transmission (10) comprenant un moteur d'entraînement (12) électrique présentant un arbre d'induit (22) et une transmission (14) disposée après celui-ci, en particulier une transmission à vis sans fin, qui est connectée fonctionnellement au moteur d'entraînement (12) par le biais de l'arbre d'induit (22), qui s'applique au moins au niveau de l'un de ses côtés frontaux (28, 30) par le biais d'un élément de butée (32) contre une partie de boîtier (16), la partie de boîtier (16) présentant une formation (38), et un moyen d'amortissement (36) étant disposé dans cette formation (38), la formation (38) présentant une ouverture axiale (42) vers l'élément de butée (32), le moyen d'amortissement (36) pouvant presser à travers cette ouverture (42) contre l'élément de butée (32), **caractérisé en ce que** le moyen d'amortissement (36) peut être monté entre l'élément de butée (32) et la partie de boîtier (16), radialement et perpendiculairement par rapport à l'arbre d'induit (22), la formation (38) présentant une ouverture radiale (40) qui est disposée perpendiculairement à l'arbre d'induit.

12. Procédé selon la revendication 11, **caractérisé en ce qu'**après le montage de l'arbre d'induit (22), son jeu longitudinal peut être efficacement éliminé de manière sélective, avec ou sans moyen d'amortissement (36).

13. Procédé selon l'une quelconque des revendications précédentes, **caractérisé en ce qu'**après le montage de l'arbre d'induit (22) dans la partie de boîtier (16), le jeu longitudinal de l'arbre d'induit (22) est mesuré sur la base de la direction de montage radiale de l'élément de butée (32).

14. Procédé selon l'une quelconque des revendications précédentes, **caractérisé en ce que** le disque de butée (32) est monté radialement après le montage de l'arbre d'induit (22) dans la partie de boîtier (16) .

15. Procédé selon l'une quelconque des revendications précédentes, **caractérisé en ce que** l'épaisseur axiale (46) de l'élément de butée (32), qui s'applique contre un épaulement (44) de la partie de boîtier (16), est choisie de telle sorte que le jeu longitudinal soit compensé.

16. Procédé selon l'une quelconque des revendications précédentes, **caractérisé en ce que** l'élément de butée (32), après son montage, s'applique directement contre l'épaulement (44) et presse l'élément d'amortissement (36) avec précontrainte contre l'élément de butée (32).
